Europäisches Patentamt

European Patent Office

Office européen des brevets

(19)

(11) Veröffentlichungsnummer : **0 371 003 B1**

(12)
# EUROPÄISCHE PATENTSCHRIFT

(45) Veröffentlichungstag der Patentschrift :
23.12.92 Patentblatt 92/52

(51) Int. Cl.$^5$ : **G01N 21/86,** G01N 21/01

(21) Anmeldenummer : 90100574.4

(22) Anmeldetag : 14.06.84

(54) Gerät zur analytischen Bestimmung von Bestandteilen einer Körperflüssigkeit.

(30) Priorität : 16.06.83 DE 3321785

(43) Veröffentlichungstag der Anmeldung :
30.05.90 Patentblatt 90/22

(60) Veröffentlichungsnummer der früheren
Anmeldung nach Art. 76 EPü : **0 129 220**

(45) Bekanntmachung des Hinweises auf die
Patenterteilung :
23.12.92 Patentblatt 92/52

(84) Benannte Vertragsstaaten :
AT BE CH DE FR GB IT LI LU NL SE

(56) Entgegenhaltungen :
DE-A- 3 112 029
DE-A- 3 130 749
DE-U- 1 814 304
US-A- 4 038 030
US-A- 4 053 235
US-A- 4 232 971

(73) Patentinhaber : BOEHRINGER MANNHEIM
GMBH
Sandhofer Strasse 116
W-6800 Mannheim 31 (DE)

(72) Erfinder : Jäck, Thomas, Dipl.-Ing.
Pfalzstrasse 28
W-7541 Straubenhardt (DE)
Erfinder : Knoll, Dieter, Dr. rer. nat. Phys.
Wendelinsweg 4
W-6242 Kronberg (DE)
Erfinder : Meinecke, Dieter
Braustrasse 5
W-6800 Mannheim 31 (DE)
Erfinder : Pauli, Manfred
Kastanienweg 8
W-6830 Schwetzingen (DE)
Erfinder : v. Rijkevorsel, Rainer, Dipl.-Ing.
Freiburger Strasse 3
W-6831 Brühl (DE)
Erfinder : Schüssler, Rudolf
Oberlacher Strasse 20
W-6840 Lampertheim (DE)

(74) Vertreter : Pfeifer, Hans-Peter, Dr.rer.nat.
Patentanwalt Nowackanlage 15
W-7500 Karlsruhe 1 (DE)

EP 0 371 003 B1

## Beschreibung

Die Erfindung betrifft ein Gerät zur analytischen Bestimmung von Bestandteilen einer Körperflüssigkeit mit Hilfe von Testträgern. Das Gerät hat eine Meßeinheit und eine Positioniereinrichtung, mittels welcher ein Testträger dergestalt in eine Meßposition positioniert und festgehalten wird, daß sich sein Testfeld in einer betimmten Lage bezüglich der Meßeinheit befindet.

Zur Bestimmung von Bestandteilen von Körperflüssigkeiten, wie z.B. Blut oder Urin, werden in der klinischen Chemie zunehmend feste Testträger eingesetzt. Im Vergleich zu den klassischen Methoden, bei denen die Proben mit flüssigen Reagenzien gemischt wurden, zeichnen sich diese Verfahren insbesondere durch eine erheblich vereinfachte Durchführung aus. Die Testträger müssen im Prinzip nur noch mit der Probe in Kontakt gebracht und dann in ein verhältnismäßig einfach aufgebautes Auswertegerät eingesetzt werden. Dadurch läßt sich ein hohes Maß an Zuverlässigkeit auch bei Bedienung durch wenig ausgebildetes Personal erreichen. Außerdem lassen sich derartige Geräte dezentral jeweils dort aufstellen, wo die Analyse gebraucht wird ihr Ergebnis ist in kurzer Zeit problemlos verfügbar.

Testträger vergleichsweise einfacher Art sind seit vielen Jahren in Form von Teststreifen geläufig, bei denen ein die Reaktionsschicht enthaltenes Testfeld auf einem länglichen Kunstoffstreifen aufgebracht ist, dessen Stärke und Material so bemessen sind, daß er insgesamt flexibel ist. Seitdem es gelungen ist, die Farbreaktion auf den Testfeldern solcher Teststreifen mit einem hohen Grad an Genauigkeit mit der Konzentration des zu bestimmenden Bestandteils zu verknüpfen, werden die Teststreifen auch mit Hilfe entsprechender Geräte quantitativ ausgewertet. Dies geschieht in der Regel dadurch , daß mit einem Reflexionsphotometer das diffuse Reflexionsvermögen der Testfeldoberfläche nach der Reaktion gemessen wird.

Die Qualität und die Gebrauchseigenschaften des zur Auswertung verwendeten Geräts werden wesentlich durch die darin vorhandene Einrichtung zum Positionieren des Testfeldes relativ zur Meßeinheit des Gerätes bestimmt. Diese muß einerseits so gestaltet sein, daß der Testträger möglichst leicht und problemlos eingelegt und nach durchgeführter Messung wieder entnommen werden kann. Die Positioniereinrichtung muß aber zugleich in der Lage sein, das Testfeld sehr präzise reproduzierbar an die gleiche Stelle relativ zur Meßeinheit zu plazieren. Für einen flachen Testträger, wie er zur Verwendung mit dem erfindungsgemäßen Gerät in Frage kommt, muß diese Anforderung in zweierlei Hinsicht beachtet werden. Zum einen muß die auswertbare Fläche des Testfeldes genau unter der Meßeinheit positioniert sein. Diesbezüglich sind oft hohe Anforderungen zu stellen, weil die auswertbare Testfeldfläche sehr klein ist; um einerseits nur den homogensten mittleren Bereich des Testfeldes zu nutzen und andererseits mit möglichst wenig Reagenzien und einer möglichst kleinen Probenmenge auszukommen. Zum zweiten muß auch der Abstand zwischen der Testfeldoberfläche und der Meßeinheit äußerst genau reproduzierbar sein, da jede unkontrollierte Variation dieses Abstandes das Meßergebnis verfälschen würde. Bekannte Geräte der eingangs bezeichneten Art sind beispielsweise in der EP-A-37484, in der GB-A-1303758 und in der GB-A-1598086 beschrieben. Bei allen diesen Geräten wird die Positionierung des als Teststreifen ausgebildeten Testträgers in Richtung seiner Testfeldfläche dadurch erreicht, daß der Teststreifen in einen entsprechenden Kanal oder Schacht eingeführt wird, dessen Seitenwände den Teststreifen führen, bis er an einem Anschlag anliegt. Der Kanal ist auch geeignet, eine Justierung in Richtung senkrecht auf die Testfeldfläche zu erreichen, wenn er konisch ausgebildet ist, wie dies beispielsweise der GB-A-1303758 zu entnehmen ist. In diesem Fall erweist sich jedoch das Einführen des Teststreifens als schwierig.

Besonders vorteilhafte Testträger, wie sie in der DE-A-3130749 beschrieben sind, ermöglichen es, die gewünschten analytischen Bestimmungen unmittelbar an einer Blutprobe vorzunehmen, ohne daß es notwendig ist, zuvor durch Zentrifugieren Plasma oder Serum zu gewinnen. Zu diesem Zweck hat der dort beschriebene Testträger eine auf dem Basisstreifen angeordnete flache Separationsschicht, auf die an einem Ende die Blutprobe aufgegeben wird. Die Separationschicht besteht aus Glasfasermaterial, das die roten Blutköperchen in der Nähe der Aufgabestelle zurückhält. Das Blutplasma breitet sich dagegen in der Schicht aus, so daß in dem von der Aufgabestelle entfernten Bereich der Separationsschicht ein "Plasmasee" zur Verfügung steht. Über diesem befindet sich mindestens eine Reaktionsschicht, die aus einem mit Reagenzien imprägnierten Papier besteht und nach Art einer Klappe nur an einer Kante an dem Testträger befestigt ist. Zwischen dieser Schicht und der Separationsschicht kann sich ein hydrophobiertes Netz befinden. Die Reaktion läßt sich nach der wie beschrieben erfolgten Gewinnung des Plasmas bei einem derartigen Testträger einfach dadurch starten, daß auf die einseitig befestigte Klappe vollflächig ein Druck ausgeübt wird. Zur Auswertung eines derartigen Testträgers muß das entsprechende Auswertegerät eine Positioniereinrichtung haben, die den Teststreifen unabhängig davon, ob er gegen die Meßeinheit angedrückt wird oder nicht, genau positioniert.

Der Erfindung liegt die Aufgabe zugrunde, ein Gerät zur Auswertung von Testträgern und insbesondere dessen Einrichtung zur Aufnahme und Positionierung der Testträger mit dem Ziel einer möglichst einfachen Handhabung und höchster Genauigkeit der Auswertung zu verbessern.

In der EP-A-129 220, zu der die vorliegende europäische Patentanmeldung eine Teilanmeldung ist, wird ein Gerät mit einer besonders vorteilhaften Positioniereinrichtung beschrieben. Auf diese Anmeldung ("Stammanmeldung") wird hier vollständig Bezug genommen.

Gemäß einer besonders bevorzugten Ausführungsform der EP-A 129 220, die auch für diese Teilanmeldung besonders vorteilhaft ist, ist die Positioniereinrichtung so gestaltet, daß gegen den eingespannten Testträger etwa im Bereich seines Testfeldes, von seiner der Auflagefläche zugewandten Rückseite her, eine federnd gelagerte Andruckplatte drückt.Die Andruckplatte ist bevorzugt so gelagert, daß sie in dem Bereich, in dem sie im Betrieb federnd nachgibt, allseitig kippbar ist. In der Meßposition drückt andererseits die Meßeinheit bevorzugt mit einer Blende oder dergleichen von der Vorderseite des Testträgers her auf dessen Testfeld.

Durch diese Konstruktion werden zwei wesentliche Vorteile miteinander verbunden. Zum einen drückt die Andruckplatte gegen die Rückseite des Teststreifens, sobald dieser in die Halteeinrichtungen eingespannt ist, unabhängig davon, ob auf der anderen Seite ein Gegendruck auf das Testfeld ausgeübt wird. Die Andruckplatte ist bevorzugt temperierbar ausgebildet. Dadurch wird das Testfeld bereits unmittelbar nach dem Einspannen des Testträgers auf die gewünschte Temperatur gebracht. Davon unabhängig ist es möglich, erst zu einem späteren Zeitpunkt Druck auf das Testfeld von seiner Oberseite auszuüben, wie dies von besonderer Bedeutung ist, wenn der zuvor erwähnte Testträger mit Klappe gemäß der DE-A-3130749 ausgewertet werden soll. Zum zweiten werden durch die federnde Andruckplatte unterschiedliche Testfelddicken und praktisch kaum vermeidbare Toleranzen in der Führung der Meßeinheit bzw. deren Meßblende in vorteilhafter Weise ausgeglichen.

Die der vorliegenden Teilanmeldung zugrundeliegende Erfindung richtet sich auf ein Gerät der eingangs bezeichneten Art, das besonders zur Auswertung der bereits erwähnten Typen von Testträgern ausgebildet ist, die eine nach Art einer Klappe an einer Kante an dem Testträger befestigte Deckschicht aufweisen. Wie erwähnt, sind besondere Ausführungsformen solcher Testträger in der DE-A-3130749 beschrieben. Hier kommt es wesentlich darauf an, daß das Andrücken der Deckschicht auf den Testträger in einer solchen Art und Weise geschieht, daß der Einschluß von Blasen zwischen der Deckschicht ("Klappe") und dem darunter befindlichen "Plasmasee" möglichst vollständig vermieden wird.

Um dieses Ziel zu erreichen, hat das Gerät ein Blendenelement mit einer Kontaktfläche zum Anpressen der Deckschicht, wobei das Blendenelement und-

/oder die Positioniereinrichtung dergestalt gelagert und antreibbar ist, daß die Kontaktfläche beim Anpressen der Deckschicht relativ zu dem Testträger eine Schwenkbewegung um eine Schwenkachse macht, die parallel zur Befestigungskante der Deckschicht verläuft.

Das Blendenelement ist im einfachsten Fall ein Metallteil mit einer ebenen unteren Kontaktfläche, die in Kontakt mit der Klappe des Testträgers gebracht wird und mit einem kreisrunden Loch, das als Fenster dient, durch welche die Verfärbung der mit der Klappe verbundenen Testschicht optisch ausgewertet werden kann. Durch die beschriebene Bewegung wird erreicht, daß sich der Druck beim Andrücken der Kontaktfläche des Blendenelements gegen die Klappe im Bereich des Testfeldes unter Vermeidung von Lufteinschlüssen gleichmäßig fortpflanzt.

Besonders bevorzugt ist das Blendenelement dergestalt gelagert und antreibbar, daß die Kontaktfläche beim Anpressen der Testträgerklappe eine gleitende Relativbewegung von der Befestigungskante der Klappe weg macht. Dadurch wird die Gefahr von Lufteinschlüssen noch besser vermieden und die Klappe besonders gleichmäßig angedrückt.

Es ist zu betonen, daß die Lösung gemäß dieser Teilanmeldung besonders vorteilhaft in Verbindung mit der gemäß der Stammanmeldung eingesetzt wird.

Die komplizierte Bewegung des Blendenelements relativ zum Testträger läßt sich prinzipiell mit Hilfe entsprechender Servoantriebe und elektronischer Steuerung in vielerlei Weise realisieren. In der Praxis ist jedoch die erforderliche Zuverläßigkeit und kostengünstige Konstruktion zu berücksichtigen. Dabei ist es besonders vorteilhaft, wenn für den Fall, daß die gesamte Positioniereinrichtung schwenkbar ist (wie beispielsweise in der Stammanmeldung und nachfolgend anhand der Figuren beschrieben), der gleiche Antrieb auch für das Andrücken der Testträgerklappe eingesetzt wird. In diesem Sinne ist es vorteilhaft, wenn das Blendenelement über einen Kupplungsmechanismus mit dem Antrieb für die Positioniereinrichtung verbunden ist. Besonders vorteilhaft ist das Blendenelement ein im Betrieb mit der Meßeinheit fest verbundenes Teil, wobei der erwähnte Antrieb über den Kupplungsmechanismus die Positioniereinrichtung und die Meßeinheit so antreibt, daß die gewünschte Relativbewegung zwischen der Positioniereinrichtung und der Meßeinheit erreicht wird.

Praktisch geeignet sind hier alle Kupplungsmechanismen, die hinreichend spielfrei arbeiten, einfach aufgebaut sind und nicht zuviel Kraft verbrauchen. Insbesondere kommt eine entsprechende Kulissenführung in Frage. Besonders bevorzugt, weil besonders einfach aufgebaut und zuverlässig in der Funktion ist ein Kupplungsmechanismus, der zwei ineinandergreifende Zahnkränze hat, die über entsprechende beispielsweise sektorförmige Verbindungsteile einerseits mit der Meßeinheit und andererseits mit der Positioniereinrichtung verbunden sind. Die beiden Zahnkränze verlaufen kreisförmig um zwei Schwenkachsen, um die einerseits die Baueinheit zu der die Positioniereinrichtung gehört, und andererseits die Baueinheit, zu der die Meßeinheit gehört, geschwenkt werden.

Ein Teil der die Positioniereinrichtung tragenden Baueinheit bildet die Andruckplatte, deren dem Testträger zugewandte Oberfläche bevorzugt im wesentlichen tangential zu der Krümmung der Auflagefläche verläuft und glatt in diese übergeht. Die Kontaktfläche des Blendenelements, die zum Andrücken der Klappe eines entsprechenden Testträgers vorgesehen ist, verläuft bevorzugt nicht senkrecht zu dem ihre Mitte kreuzenden Radius um die Schwenkachse der die Meßeinrichtung tragenden Baueinheit. Der der Meßeinheit zugeordnete Zahnkranz hat bevorzugt einen kleineren Durchmesser als der der Positioniereinrichtung zugeordnete Zahnkranz.

Durch diese Konstruktionsweise wird eine einfache und zuverlässige Kopplung der beiden Baueinheiten erreicht. Durch Versuche läßt sich ohne weiteres eine solche Zuordnung der Bauteile ermitteln, daß die erwähnten geometrischen Bedingungen bei der Annäherung der Meßblende mit ihrer Kontaktfläche an die Klappe des Testträgers erfüllt werden.

Wie erwähnt, ist das erfindungsgemäße Gerät besonders zur Auswertung von Testträgern der in der DE-A-3130749 beschriebenen Art geeignet. Hier verbinden sich die erwähnten Vorteile der einzelnen Konstruktionsmerkmale in idealer Weise miteinander. Durch die Einspannung des streifenförmigen Testträgers zwischen den Haltevorrichtungen gemäß der Stammanmeldung wird dieser genau ausgerichtet. Gleichzeitig drückt sich die Andruckplatte von hinten gegen Testträger im Bereich des Testfeldes und beginnt dieses zu temperieren. Dies ist möglich, während zugleich noch kein Druck von der Gegenseite auf das Testfeld ausgeübt wird. Dort läuft in dieser Zeit die Plasmagewinnungsphase ab. Zu einem auf den jeweiligen Test abgestimmten Zeitpunkt und mit einer entsprechenden Geschwindigkeit wird dann die Positionierungseinrichtung tragende Baueinheit aus ihrer ersten Position in die zweite Position geschwenkt, wobei eine auf der Rückseite des Testträgers vorhandene bevorzugt magnetische Codierung gelesen werden kann. Der Bewegungsablauf läßt sich ohne weiteres so steuern, daß zu einem vorbestimmten Zeitpunkt die Meßeinheit mit der Meßblende über ihre Kontaktfläche auf die Klappe des Testträgers drückt und damit die Reaktion eingeleitet wird. Soweit dies gewünscht wird, kann noch eine Belüftungsphase vorgesehen sein, bei der die Meßeinheit noch einmal zurückgeschwenkt wird, um den Druck vom Testfeld zu nehmen und dieses einer Belüftung auszusetzen. Schließlich wird zu einem weiteren vorgegebenen Zeitpunkt erneut die Kontaktfläche der Meßblende mit der Meßeinheit gegen das Testfeld gedrückt und die Messung vorgenommen.

Die Erfindung wird nun anhand der Zeichnung mit Ausführungsbeispielen näher erläutert. Es zeigen:

Fig. 1) Eine schematische Darstellung eines Teils eines erfindungsgemäßen Geräts, insbesondere der die Meßeinheit und die Positioniereinrichtung tragenden Baueinheiten, wobei ein teststreifenförmiger Testträger gerade eingeführt wird.

Fig. 2) Die Vorrichtung nach Fig. 1, wobei sich die dem Einführende des Testträgers zugeordnete Halteeinrichtung in ihrer geschlossenen Stellung befindet.

Fig. 3) Die Vorrichtung nach Fig. 1 mit vollständig eingelegtem, zwischen beiden Halteeinrichtungen gespanntem Testträger.

Fig. 4) Die Vorrichtung nach Fig. 1, wobei die Positioniereinrichtung und die Meßeinheit sich in der Meßposition befinden.

Fig. 5a bis 5c eine prinzipielle Darstellung der Bewegungsabläufe beim Andrücken einer Testträgerklappe auf den Testträger.

Fig. 6) Eine Schnittdarstellung entlang der Linie VI-VI in Fig. 4.

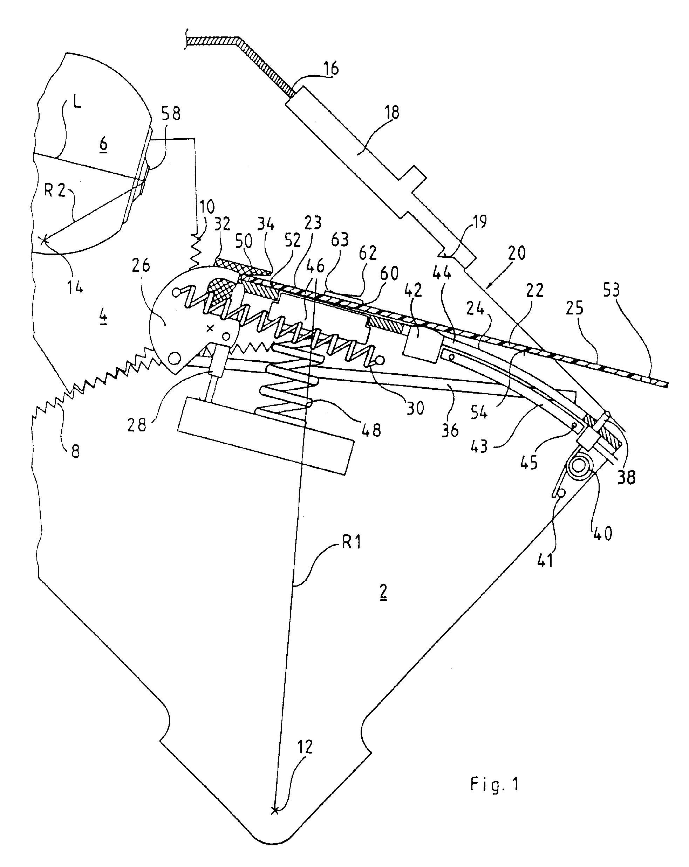

Die Figuren 1 bis 4 betreffen hauptsächlich den Gegenstand der Stammanmeldung. Da sie jedoch auch für das Verständnis der vorliegenden Erfindung hilfreich sind, werden sie nachfolgend übereinstimmend mit der Stammanmeldung beschrieben.

Fig. 1 zeigt schematisch eine seitliche Ansicht der Vorrichtung mit einem die Positioniereinrichtung tragenden Aufnahmeschlitten 2 und einem Tragschlitten 4 für eine Meßeinheit 6. Die Meßeinheit ist hier als eine Ul-bricht'sche Kugel ausgebildet, mittels welcher von einem beleuchteten Testfeld reflexionsphotometrisch die diffuse Reflexion gemessen wird. Im Rahmen der Erfindung liegen selbstverständlich auch andere Meßeinheiten. Der Aufnahmeschlitten 2 und der Tragschlitten 4 weisen sektorförmige Teile auf, welche an ihrer Stirnfläche ineinandergreifende Zahnkränze 8,10 enthalten. Die beiden Schlitten 2,4 sind um Drehachsen 12,14 schwenkbar, wobei aufgrund der Zahnkränze eine unmittelbare Kupplung der Bewegung erfolgt. Die beiden Schlitten bilden jeweils mit den an ihnen befestigten Teilen schwenkbare Baueinheiten. Zur Schwenkung des Aufnahmeschlittens und somit auch des Tragschlittens ist ein hier nicht weiter dargestellter elektrischer Motor vorgesehen. An einem hier nur angedeuteten Gehäuse 16 ist eine verschiebbare Klappe 18 vorgesehen, mittels welcher eine Aufnahmeöffnung 20 verschließbar ist. Durch die Aufnahmeöffnung 20 kann ein als Teststreifen 22 ausgebildeter Testträger mit seinem Einführende 23 eingeführt werden. Die Vorrichtung mit dem Aufnahmeschlitten 2 und dem Trageschlitten 4 ist auf einem Gestell innerhalb des Gehäuses 16 angeordnet. Im Bereich der Aufnahmeöffnung weist der Aufnahmeschlitten 2 eine gekrümmte Auflagefläche 24 für den Teststreifen 22 auf; ein ungehindertes Einführen des an seinem Handhabungsende 25 festgehaltenen Teststreifens 22 ist ohne Schwierigkeiten möglich.

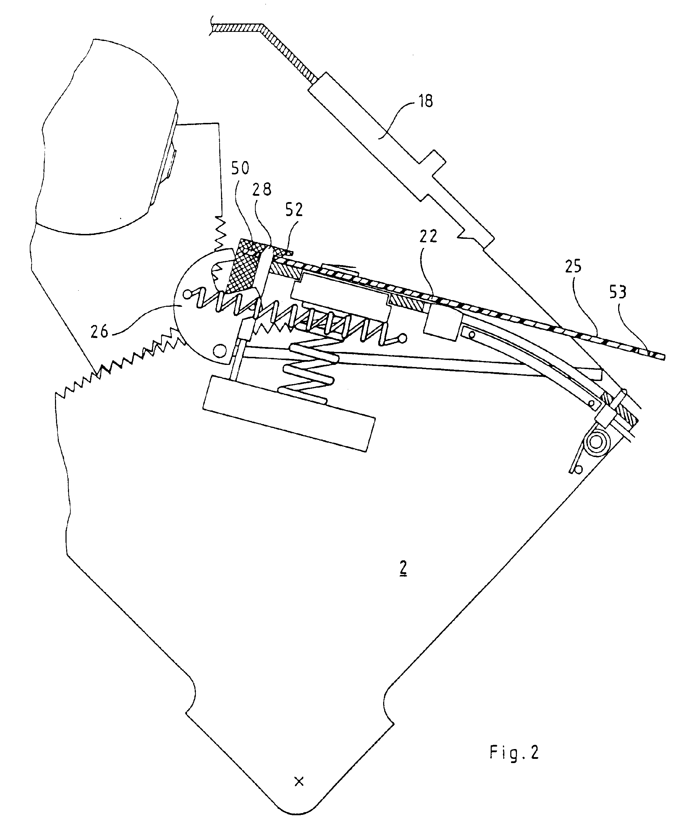

Der Aufnahmeschlitten 2 enthält ferner ein Betätigungselement in Form einer als Nockenscheibe 26 ausgebildeten Hebeleinrichtung, mit welcher ein Arretierstift 28 gekoppelt ist. Mit dem vorderen Ende 50 liegt der Teststreifen 22 am oberen Ende der Nockenscheibe 26 an. Mittels eines Federelements wird die Nockenscheibe sowohl in der in Fig. 1 dargestellten ersten Endstellung als auch in der in den Fig. 2 bis 4 dargestellten zweiten Endstellung jeweils in Richtung von einem zwischen beiden Endstellungen liegenden Scheitelpunkt des Schwenkweges weg mit einer Kraft beaufschlagt. Im Bereich des Arretierstiftes 28 befindet sich auf dem Aufnahmeschlitten 2 noch ein Führungselement 32 mit einem Führungsschlitz 34 für den Teststreifen 22. Der Führungsschlitz läuft sowohl in der Zeichenebene als auch in einer Ebene senkrecht dazu leicht konisch zu. Dadurch führt das Führungselement 32 das Einführende 23 des Teststreifens 22 in die Position, in der der Arretierstift 28 in die entsprechende Ausnehmung 52 des Teststreifens 22 eindringen kann. Mit der Nockenscheibe 26 ist ferner eine Auswerferstange 36 verbunden. Am anderen Ende des Aufnahmeschlittens 2 befindet sich eine zweite Haltevorrichtung für den Teststreifen 22. Sie schließt als Arretierelement einen Spannstift 38 ein, der von einer Feder 40 beaufschlagt ist, die sich an einem Widerlager 41 abstützt.

Im Bereich der Auflagefläche 24 ist ein Lesekopf 42 für einen auf der Rückseite 54 des Teststreifens 22 aufgebrachten Magnetcode gestellfest angeordnet. Die Auflagefläche 24 des Aufnahmeschlittens 2 weist für den Lesekopf 42 einen sich in ihrer Längsrichtung erstreckenden Schlitz 44 auf. Der Schlitz 44 ist mittels eines Schiebers 43 in der dargestellten Position des Aufnahmeschlittens 2 im wesentlichen verschlossen. Der Schieber 43 ist auf senkrecht zur Zeichenebene angeordneten Bolzen 45 im Aufnahmeschlitten 2 bewegbar. Mittels einer nicht näher dargestellten Mechanik kann der Schieber 43 zur Freigabe des Schlitzes 44 für den Lesekopf 42 beim Schwenken des Aufnahmeschlittens 2 zur Seite bewegt werden. Der Lesekopf 42 ragt in einem vorgegebenen Abstand über die Auflagefläche 24 für den Teststreifen hinaus. Schließlich ist eine Andruckplatte 46 vorgesehen, um in der Meßposition einen definierten Anpressdruck und ferner auch eine planparallele Anlage des Testfeldes zu erhalten. Das zugehörige Federelement 48 weist zum Toleranzausgleich eine progressive Federkennlinie auf.

Fig. 2 zeigt die Vorrichtung mit einem vollständig eingeschobenen Teststreifen 22. Mittels des vorderen Endes 50 des Teststreifens 22 wird die Nockenscheibe 26 in die dargestellte Position geschwenkt. Einzelheiten hierzu sind der EP-A-0037484 zu entnehmen.

Hierbei wurde der Arretierstift 28 nach oben bewegt und er greift nunmehr in eine Ausnehmung 52 des Teststreifens ein. Das Einführende 23 des Teststreifens 22 ist folglich in definierter Weise auf dem Aufnahmeschlitten 2 positioniert.

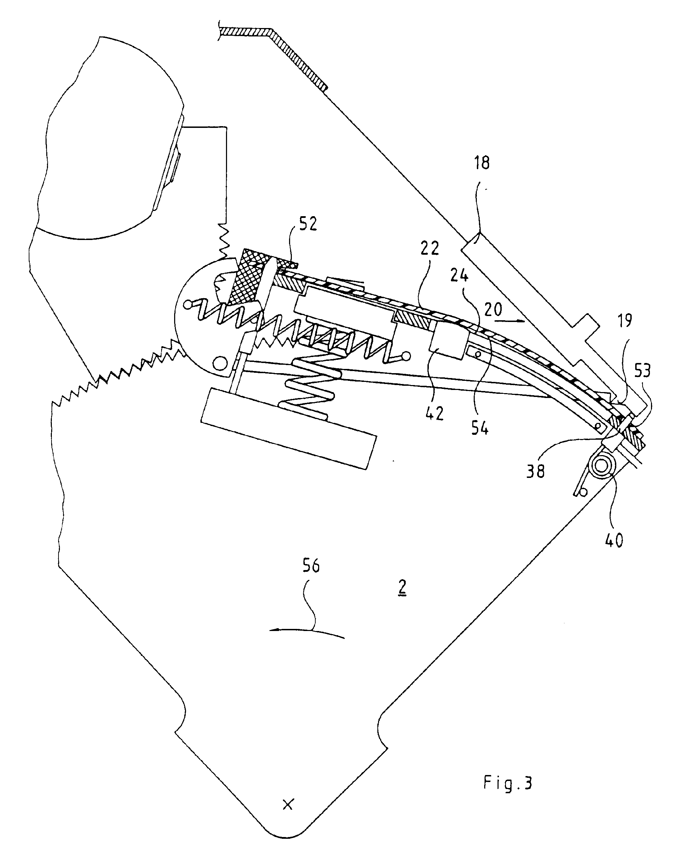

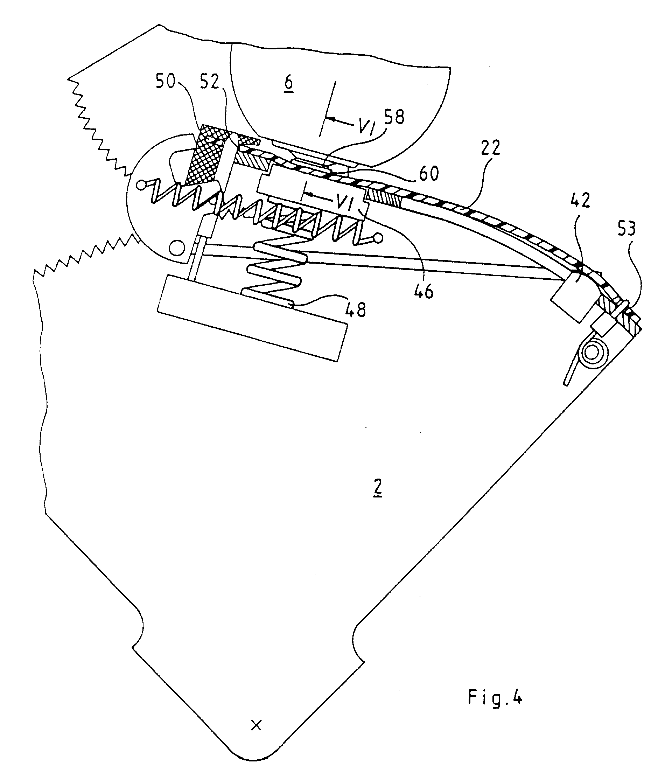

In Fig. 3 ist die Klappe 18 in der die Aufnahmeöffnung 20 verschließenden Stellung dargestellt. Beim Herunterschieben der Klappe 18 wurde mit Hilfe eines entsprechenden Vorsprungs 19 der Teststreifen 22 auch auf die gekrümmte Auflagefläche 24 gedrückt Hierbei wurde auch gleichzeitig der Spannstift 38 in eine weitere Ausnehmung 53 des Teststreifens 22 eingeführt. Wie ersichtlich, beaufschlagt die Feder 40 den Spannstift 38 mit einer Kraft in Längsrichtung des Teststreifens von dessen Mitte weg, so daß eine entsprechende Zugkraft auf den Teststreifen 22 einwirkt und dieser somit fest auf dem Aufnahmeschlitten 2 aufgespannt ist. Der Lesekopf 42 ragt etwas über die Auflagefläche 24 hinaus, wodurch eine gute Umschlingung durch den Teststreifen 22 erreicht wird. Auf der Rückseite 54 des Teststreifens 22 befindet sich eine Magnetschicht, welche binärcodierte Daten enthält. Diese Daten werden beim Schwenken des Schlittens in Richtung des Pfeils 56 automatisch gelesen und in einer geeigneten Elektronik entsprechend ausgewertet. In Fig. 4 ist die Endposition der Schwenkbewegung dargestellt. Man erkennt, daß durch das Verschwenken des Aufnahmeschlittens 2 gegenüber dem ortsfesten Lesekopf 42 sich dieser nach dem Schwenkvorgang am Handhabungsende des Teststreifens 22 befindet, d.h. das der Magnetlesekopf während der Schwenkbewegung dem gesamten mit einer Magnetschicht bedeckten Teil des Teststreifens 22 überstrichen hat.

Fig. 4 zeigt den Aufnahmeschlitten 2 und die Meßeinheit 6 in der Meßposition. Die Meßblende 58 liegt definiert auf dem Meßfeld 60 des Teststreifens auf, wobei über die Andruckplatte 46 und das Federelement 48 ein vorgegebener Anpressdruck aufrecht erhalten wird.

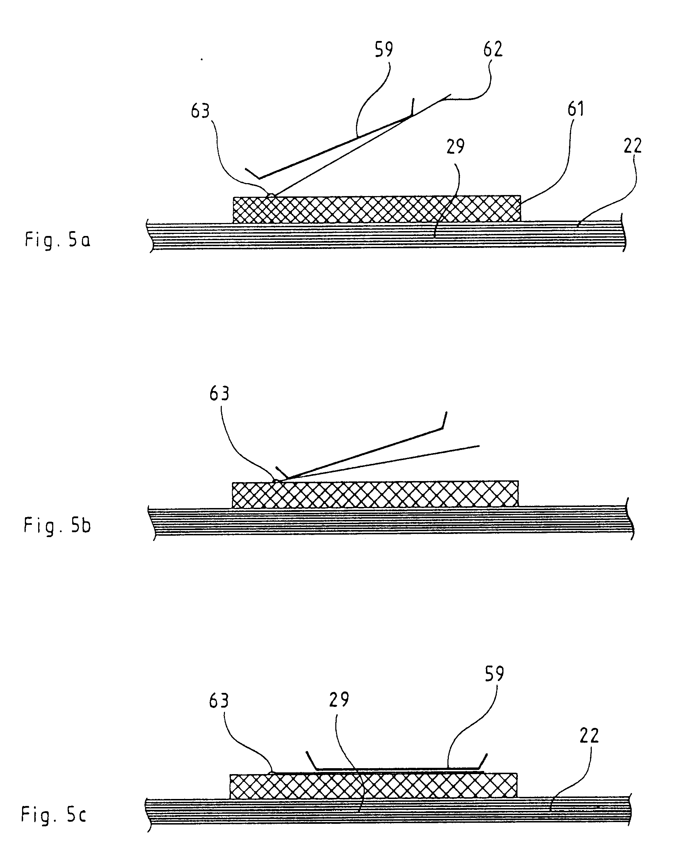

Fig. 5 zeigt schematisch in einer stark übertriebenen Darstellung verschiedene Phasen der Bewegung der Kontaktfläche 59 der Blende 58 bei der Annäherung an den Teststreifen 22, wobei dieser einen ortfest dargestellten Bezugspunkt bildet. Man erkennt eine auf dem Basisstreifen 29 des Teststreifens 22 vollflächig aufliegende Plasmagewinnungsschicht 61. Darüber befindet sich eine als Klappe 62 ausgebildete in Aufsicht rechteckige Deckschicht, die nur an einer Kante 63, die im folgenden als Befestigungskante bezeichnet wird, mit dem Basisstreifen 29 (in der dargestellten Ausführungsform über die Plasmagewinnungsschicht 61) verbunden ist. In der in Fig. 5a dargestellten Bewegungsphase hat eine Kante der Kontaktfläche 59 gerade die Klappe 62 berührt und beginnt, diese nach unten zu drücken. In Fig. 5b befindet sich die Klappe 62 in einer Position kurz bevor sie mit der Plasmagewinnungsschicht 61 in Kontakt kommt. In Fig. 5c liegt die Kontaktfläche 59 vollständig auf der Klappe 62 und diese auf der Plasmagewinnungsschicht 61 auf. Man erkennt, daß die Kontaktfläche 59 eine Bewegung ausführt, die sich im wesentlichen aus zwei Komponenten zusammensetzt, nämlich eine Schwenkbewegung und eine Bewegung in Richtung parallel zur Oberfläche des Teststreifens 22 von der Befestigungskante 63 der Klappe 62 weg. Die Schwenkbewegung hat in der Darstellung der Fig. 5, bei der, wie erwähnt, das Bezugssystem sich mit dem Teststreifen 22 bewegt, so daß dieser in der Fig. ortsfest erscheint, keine feste Schwenkachse. Wie aus den Figuren zu ersehen ist, bewegt sich die Schwenkachse aber in der dargestellten Annäherungsphase jedenfalls in der Nähe der Befestigungskante 63 der Klappe 62 und verläuft näherungsweise parallel zu dieser. Dabei ergibt sich, daß in der letzten Phase der Annäherung sich der von der Kontaktfläche 59 auf die Klappe ausgeübte Druck von deren Befestigungskante weg, also in der Darstellung der Fig. 5 von links nach rechts aufbaut. Dadurch werden Lufteinschlüsse vermieden. Es ist unschädlich, daß, wie in Fig. 5a zu ersehen, zu Anfang der Annäherungsphase die Kontaktfläche 59 die Klappe 62 zuerst an dem von der Befestigungskante 63 abgewandten Ende kontaktiert. Entscheidend ist lediglich, daß die zitierte Schwenkbewegung in der letzten Phase der Annäherung (Fig. 5b, Fig. 5c) realisiert wird.

Ein noch gleichmäßigeres Andrücken der Klappe 62 gegen die Plasmagewinnungsschicht 61 wird durch die beschriebene Bewegungskomponente parallel zur Oberfläche des Testträgers, in der Fig. 5 von links nach rechts, erreicht.

Der anhand von Fig. 5 beschriebene Bewegungsablauf läßt sich bei einer Konstruktion, wie sie in den Fig.1 bis 4 dargestellt ist, dadurch realisieren, daß die Andruckplatte 46 und die Meßblende 58 relativ zu den jeweils ihre Mitte kreuzenden Radien (R1,bzw.R2) der zugehörigen Schwenkachsen 12 bzw. 14 in entsprechender Weise angeordnet werden, wobei die momentane Bewegung in der Annäherungsphase sowohl von der Neigung der Andruckplatte 46 bzw. der Meßblende 58 zu den jeweiligen Radien als auch durch deren Abstand von der Schwenkachse bestimmt wird. Welche Anordnung im Einzelfall zu wählen ist, läßt sich mit Hilfe der Getriebelehre zeichnerisch oder durch Optimierungsversuche bestimmen. Als besonders vorteilhaft hat sich eine Konstruktion der dargestellten Art bewährt, bei der die Andruckplatte 46 die Krümmung der Auflagefläche 24 näherungsweise tangential fortsetzt und bei der die Kontaktfläche 59 der Meßblende 58 in der in Fig. 1 dargestellten Stellung so gegen den ihre Mitte kreuzenden Radius R2 durch die zugehörige Schwenkachse 14 geneigt ist, daß ein Lot L auf die Kontaktfläche 59 auf der von dem Aufnahmeschlitten 2 abgewandten Seite der Schwenkachse 14 verläuft.

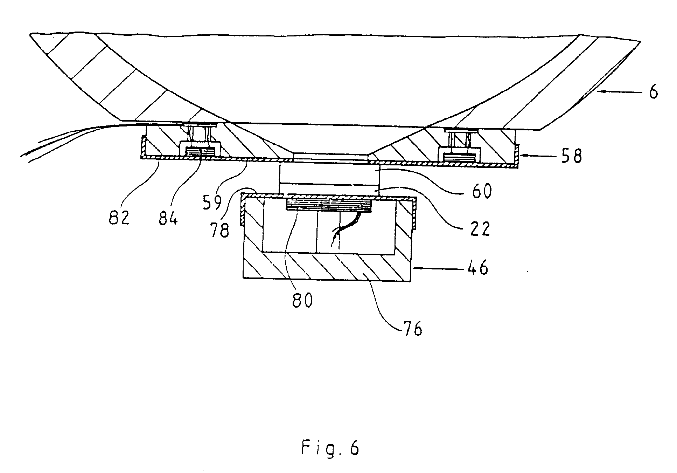

Fig. 6 zeigt vergößert den unteren Teil der Meßeinheit 6 mit der Blende 58. Es ist ferner ein Träger 76 mit einer Heizplatte 78 zu erkennen, die Teile der Andruckplatte 46 sind. Zwischen der Heizplatte 78 und der Meßblende 58 ist der Teststreifen 22 mit dem Testfeld (bestehend aus Plasmagewinnungsschicht 61 und Klappe 62) zu sehen, wobei sich hier der Teststreifen 22 senkrecht zur Zeichenebene erstreckt. Die Heizplatte 78 ist Bestandteil einer Heizeinrichtung, welche ein Heizelement 80 aufweist. Auf der Meßblende 58 ist ebenfalls eine Heizplatte 82 mit Heizelementen 84 angeordnet. Besonders vorteilhaft ist, daß die Andruckplatte schon bei der in Fig. 3 dargestellten Phase, also sobald der Teststreifen 22 zwischen den beiden Halteinrichtungen gespannt ist, von hinten im Bereich des Testfeldes 60 gegen den Teststreifen 22 gedrückt wird. Dadurch ist eine Vortemperierung bereits in dieser Phase möglich, also möglicherweise längere Zeit, bevor die Meßeinheit 6 mit der Meßblende 58 von der Vorderseite gegen das Testfeld 60 gedrückt wird (Fig. 4). Dadurch wird eine Vortemperierung möglich, was zu einer Erhöhung der Temperierungsgenauigkeit und/oder zu einer erheblichen Zeitersparnis führt.

**Patentansprüche**

1. Gerät zur analytischen Bestimmung von Bestandteilen einer Körperflüssigkeit mit Hilfe von flachen Testträgern (22), welche eine nach Art einer Klappe an einer Kante (63) an dem Testträger befestigte Deckschicht (62) aufweisen, mit einer Meßeinheit (6) und einer Positioniereinrichtung, mittels welcher ein Testträger (22) dergestalt in einer Meßposition positioniert und festgehalten wird, daß sich sein Testfeld (60) in einer bestimmten Lage bezüglich der Meßeinheit (6) befindet, bei dem
   ein Blendenelement (58) mit einer Kontaktfläche (59) zum Anpressen der Deckschicht gegen den Testträger vorhanden ist, und
   das Blendenelement (58) und/oder die Positioniereinrichtung dergestalt gelagert und antreibbar ist, daß die Kontaktfläche (59) beim Anpressen der Deckschicht (62) relativ zu dem Testträger (22) eine Schwenkbewegung um eine Schwenkachse macht, die parallel zu der Befestigungskante (63) der Deckschicht (62) verläuft.

2. Gerät nach Anspruch 1, bei dem das Blendenelement (58) und/oder die Positioniereinrichtung dergestalt gelagert und antreibbar ist, daß die Kontaktfläche (59) eine Bewegung ausführt, die außer der Schwenkkomponente auch eine Komponente parallel zur Oberfläche des Testträgers (22) von der Befestigungskante (63) weg hat.

3. Gerät nach Anspruch 1 oder 2, bei dem das Blendenelement (58) ein im Betrieb mit der Meßeinheit (6) verbundenes Teil ist.

4. Gerät nach einem der vorhergehenden Ansprüche, bei dem die Positioniereinrichtung in ihrer Gesamtheit mittels eines Schwenkantriebs um eine Schwenkachse (12) schwenkbar ist, und die Meßeinheit (6) über einen Kupplungsmechanismus geführt und gemeinsam mit der Positioniereinrichtung vom gleichen Antrieb schwenkbar ist.

5. Gerät nach Anspruch 4, bei dem der Kupplungsmechanismus zwei ineinandergreifende Zahnkränze (8,10)) umfaßt, von denen einer mit der Positioniereinrichtung und der andere mit der Meßeinheit (6) fest verbunden ist.

6. Gerät nach Anspruch 5, bei dem der der Meßeinheit (6) zugeordnete Zahnkranz (10) einen kleineren Durchmesser als der der Positioniereinrichtung zugeordnete Zahnkranz (8) hat.

**Claims**

1. Apparatus for the analytical determination of components of a body fluid with the help of flat test carriers (22) which have a covering layer (62) fixed in the manner of a flap on one edge (63) of the test carrier with a measurement unit (6) and a positioning device by means of which a test carrier (22) is positioned and securely held in a measurement position in such a manner that its test field (60) is present in a definite position with regard to the measurement unit (6), in which a diaphragm element (58) is present with a contact surface (59) for the pressing on of the covering layer against the test carrier and the diaphragm element (58) and/or the positioning device is mounted and operable in such a manner that the contact surface (59), in the case of the pressing on of the covering layer (62), makes, relative to the test carrier (22), a tilting movement about a tilting axis which runs parallel to the fixing edge (63) of the covering layer (62).

2. Apparatus according to claim 1 in which the diaphragm element (58) and/or the positioning device is mounted and operable in such a manner that the contact surface (59) performs a movement which, apart from the tilting components, also has a component parallel to the surface of the test carrier (22) away from the fixing edge.

3. Apparatus according to claim 1 or 2, in which the diaphragm element (58) is a part connected in operation with the measurement unit (6).

4. Apparatus according to one of the preceding claims in which the positioning device is, in its totality, tiltable about a tilting axis (12) by means of a tilting drive and the measurement unit (6) is guided via a coupling mechanism and, together with the positioning device, is tiltable with the same drive.

5. Apparatus according to claim 4 in which the coupling mechanism includes two interengaging toothed rims (8,10), one of which is securely connected with the positioning device and the other with the measurement unit (6).

6. Apparatus according to claim 5 in which the toothed rim (10) associated with the measurement unit (6) has a smaller diameter than the toothed rim (8) associated with the positioning device.

**Revendications**

1. Appareil pour déterminer analytiquement les composants d'un fluide corporel à l'aide de supports de test (22) plats présentant une couche de recouvrement (62) fixée, à la manière d'un clapet, sur une arête (63) du support de test (22), et comportant

    une unité de mesure (6) et un dispositif de positionnement au moyen duquel un support de test (22) de ce type est positionné et maintenu dans une position de mesure, de telle façon que son champ de test (60) se trouve dans une position déterminée par rapport à l'unité de mesure (6),

    appareil pour lequel
    - il existe un organe formant diaphragme (58) comportant une surface de contact (59) pour appuyer la couche de recouvrement contre le support de test, et
    - l'organe formant diaphragme (58) et/ou le dispositif de positionnement sont montés et peuvent être entraînés de telle façon que la surface de contact (59), lorsque la couche de recouvrement (62) est pressée contre le support de test (22), accomplisse un mouvement de balancement autour d'un axe de pivotement dirigé parallèlement à l'arête de fixation (63) de la couche de recouvrement (62).

2. Appareil suivant la revendication 1, pour lequel l'organe formant diaphragme (58) et/ou le dispositif de positionnement sont montés et peuvent être entraînés de telle façon que la surface de contact (59) exécute un mouvement qui, outre la composante de basculement, possède également une composante parallèle à la surface supérieure du support de test (22) l'éloignant de

l'arête de fixation (63).

3. Appareil suivant la revendication 1 ou la revendication 2, pour lequel l'organe formant diaphragme (58) est une pièce liée, en fonctionnement, avec l'unité de mesure (6).

4. Appareil suivant l'une quelconque des revendications précédentes, pour lequel le dispositif de positionnement peut pivoter en totalité au moyen d'un dispositif de basculement et pour lequel l'unité de mesure (6) est guidée au moyen d'un mécanisme d'accouplement et peut pivoter en même temps que le dispositif de positionnement par le même dispositif de basculement.

5. Appareil suivant la revendication 4, pour lequel le mécanisme d'accouplememt comporte deux couronnes dentées (8, 10) engrenant l'une dans l'autre, dont l'une est solidaire du dispositif de positionnement et l'autre est solidaire de l'unité de mesure (6).

6. Appareil suivant la revendication 5, pour lequel la couronne dentée (10) associée à l'unité de mesure (6) est d'un diamètre plus petit que la couronne dentée (8) associée au dispositif de positionnement.

Fig. 1

Fig.2

Fig.3

Fig.4

Fig. 5a

Fig. 5b

Fig. 5c

Fig. 6